# EUROPÄISCHE PATENTSCHRIFT

(11) **EP 0 999 493 B1**
(45) Veröffentlichungstag und Bekanntmachung des Hinweises auf die Patenterteilung: **16.12.2009**
(21) Anmeldenummer: 99121903.1
(22) Anmeldetag: 05.11.1999
(51) Int. Cl.: G06F 1/24

(54) **Schaltungsanordnung zur Spannungsüberwachung und Erzeugung eines Rücksetzsignals**
Circuit for voltage monitoring and for generating a reset signal
Circuit pour le monitorage de tension et la génération d'un signal de remise à zéro

(30) Priorität: 06.11.1998 DE 19851317
(43) Veröffentlichungstag der Anmeldung: 10.05.2000
(73) Patentinhaber: Infineon Technologies AG, 85579 Neubiberg (DE)
(72) Erfinder: Killat, Dirk, Dr., 73230 Kirchheim/Teck (DE)

(56) Entgegenhaltungen:
- US-A- 4 296 338
- US-A- 4 727 269
- US-A- 4 942 311
- US-A- 5 302 861
- US-A- 5 396 115
- US-A- 5 654 656
- PAUL HOROWITZ: "The Art of Electronics" 29. April 1993 (1993-04-29), CAMBRIDGE UNIVERSITY PRESS , CAMBRIDGE, USA

## Beschreibung

Die vorliegende Erfindung betrifft eine Schaltungsanordnung zur Spannungsüberwachung und Erzeugung eines Rücksetzsignals nach dem Oberbegriff von Patentanspruch 1, wie aus der U.S. 4,296,338 bekannt.

Die U.S. 5,396,115 bzw. U.S. 5,654,656 offenbaren Schaltungen zur Erzeugung eines Rücksetzsignals, bei denen eine Versorgungsspannung mittels des von einer Versorgungsspannungsquelle gelieferten Stroms überwacht wird und mit Schwellwerten verglichen wird.

Paul Horowith, "THE ART OF ELECTRONICS", Seiten 88 bis 91, Cambridge, USA, 29. April 1993, offenbart eine Schaltung zur Detektion eines Gleichstroms.

Die U.S. 4,727,269 offenbart einen temperaturkompensierten Stromverstärker.

Die U.S. 4,942,311 offenbart eine Rücksetzschaltung für eine Automobil-Antennensteuervorrichtung, bei der ein Startsignal ein Rücksetzsignal erzeugt.

Schaltungsanordnungen zur Spannungsüberwachung und Erzeugung eines Rücksetzsignals setzen elektronische Schaltungen in einen definierten Anfangszustand. Insbesondere wird während dem Einschalten und für eine bestimmte Zeit nach dem Einschalten der Versorgungsspannung einer elektronischen Schaltung an die elektronische Schaltung ein Rücksetzsignal geführt, das die Schaltung in den definierten Anfangszustand setzt (POR = Power-On-Reset). Dieses Rücksetzsignal wird auch im Betrieb der elektronischen Schaltung aktiviert, wenn die Versorgungsspannung eine vorgebbare Spannungsschwelle unterschreitet (UVD = Undervoltage-Detection).

Eine einfache Schaltung zur Erzeugung eines Rücksetzsignals ist in Tietze/Schenk, "Halbleiterschaltungstechnik", 9. Auflage, Springer Verlag 1990, auf Seite 669 in Abbildung 21.4 dargestellt. Nach dem Einschalten der Versorgungsspannung steigt in dieser Schaltung die Spannung am Eingang einer Inverterschaltung durch eine Widerstands-Kondensatorschaltung verzögert langsam an. Überschreitet die Spannung am Eingang einer Inverterschaltung eine Schwellspannung, kippt die Inverterschaltung und das Rücksetzsignal wird abgeschaltet. Nachteilig ist dabei die Temperaturabhängigkeit und bei einer Integration der Schaltung auch die Technologieabhängigkeit der Schwellspannung.

Das der Erfindung zugrundeliegende technische Problem liegt daher darin, eine verbesserte Schaltungsanordnung zur Spannungsüberwachung und Erzeugung eines Rücksetzsignals anzugeben, die eine hohëre Genauigkeit aufweist.

Dieses Problem wird von einer Schaltungsanordnung zur Spannungsüberwachung und Erzeugung eines Rücksetzsignals mit den Merkmalen von Patentanspruch 1 gelöst. Vorteilhafte Ausgestaltungen der Erfindung ergeben sich aus den jeweiligen Unteranspruchen.

Die Erfindung betrifft eine Schaltungsanordnung zur Spannungsüberwachung und Erzeugung eines Rücksetzsignals mit:
einer Referenzspannungsquelle;
einer Komparatorschaltung, die derart geschaltet ist, dass sie eine Ausgangsspannung der Referenzspannungsquelle mit einem Potential an einem Abgriff eines Spannungsteilers, der zwischen eine Versorgungsspannung und ein Bezugspotential geschaltet ist, vergleicht;
einem Kondensator;
einem ersten Transistor zur Entladung des Kondensators, der von einem Ausgangssignal einer Komparatorschaltung steuerbar ist;
wobei aus dem Ausgangssignal der Komparatorschaltung und aus einer Spannung des Kondensators durch eine logische ODER-Verknüpfung das Rücksetzsignal erzeugbar ist;
wobei
die Referenzspannungsquelle eine Stromquelle aufweist, wobei der Kondensator von einem Ausgangsstrom der Stromquelle aufladbar ist und die Komparatorschaltung derart geschaltet ist, dass sie von dem Ausgangsstrom der Stromquelle versorgt wird;
eine Schaltung zur Detektion eines Gleichstroms vorgesehen ist, die derart gestaltet ist, dass
sie den Ausgangsstrom der Stromquelle empfängt und davon abhängig ein Signal erzeugt, das mit dem Ausgangssignal der Komparatorschaltung und der Kondensatorspannung zur Erzeugung des Rücksetzsignals der logischen ODER-Verknüpfung zugeführt ist, und
das von der Schaltung zur Detektion eines Gleichstroms erzeugte Signal gesetzt ist, wenn der Ausgangsstrom der Stromquelle eine vorgebbare Stromschwelle unterschreitet, und zurückgenommen ist, wenn der Ausgangsstrom der Stromquelle die vorgebbare Stromschwelle überschreitet
wobei die Schaltung zur Detektion eines Gleichstroms ausgebildet ist, um während eines Hochfahrens der Versorgungsspannung einen Spannungsbereich zu überbrücken, bei dem die Komparatorschaltung aufgrund eines zu geringen Ausgangsstroms der Stromquelle nicht richtig arbeitet.
ein zweiter, dem ersten Transistor parallelgeschalteter Transistor zur Entladung des Kondensators vorgesehen ist, der durch das von der Schaltung zur Detektion eines Gleichstroms erzeugte Signal steuerbar ist.

Erfindungsgemäss steuert das von der Schaltung zur Detektion eines Gleichstroms erzeugte Signal einen zweiten Transistor zur Entladung des Kondensators. Der zweite Transistor ist dabei dem ersten Transistor parallelgeschaltet. Vorteilhafterweise wird dadurch vermieden, daß der Kondensator durch Leckströme der Referenzspannungsquelle aufgeladen wird. Beim Zurücksetzen des von der Schaltung zur Detektion eines Gleichstroms erzeugten Signals bleibt das Rücksetzsignal vorteilhafterweise noch solange gesetzt, bis der Kondensator durch den Ausgangsstrom der Referenzspannungsquelle aufgeladen ist.

Erfindungsgemäß wird das von der Schaltung zur Detektion eines Gleichstroms erzeugte Signal gesetzt, wenn der Ausgangsstrom der Stromquelle der Referenzspannungsquelle eine vorgebbare Stromschwelle überschreitet, und zurückgenommen, wenn der Ausgangsstrom der Stromquelle der Referenzspannungsquelle die vorgebbare Stromschwelle unterschreitet.

In einer besonders bevorzugten Ausführungsform weist die Schaltung zur Detektion eines Gleichstroms einen ersten, den Ausgangsstrom der Stromquelle der Referenzspannungsquelle aufnehmenden, Stromspiegel und einen zweiten, dem ersten Stromspiegel nachgeschalteten, Stromspiegel, einen vierten Transistor und einen der Laststrecke des vierten Transistors nachgeschalteten Widerstand auf. Der Steueranschluß des vierten Transistors ist mit den Steueranschlüssen der Transistoren des ersten Stromspiegels verbunden und die Laststrecke des vierten Transistors führt einen Strom, der proportional zum Ausgangsstrom des zweiten Stromspiegels ist.

Die Transistoren des ersten Stromspiegels und der vierte Transistor sind bevorzugt als n-Kanal-MOSFET-Transistoren und die Transistoren des zweiten Stromspiegels sind bevorzugt als p-Kanal-MOSFET-Transistoren in CMOS-Technologie ausgeführt.

Ferner weisen die Transistoren des ersten und zweiten Stromspiegels bevorzugt gleiche Kanal-Weiten/Längenverhältnisse auf und das Kanal-Weiten/Längenverhältnis des vierten Transistors ist bevorzugt größer als die Kanal-Weiten/Längenverhältnisse der Transistoren des ersten und zweiten Stromspiegels.

In einer besonders bevorzugten Ausführungsform weist der dem vierten Transistor nachgeschaltete Widerstand einen Temperaturkoeffizienten auf, der dem Temperaturkoeffizienten eines den Ausgangsstrom der Stromquelle der Referenzspannungsquelle bestimmenden Widerstands entspricht.

Ein dritter Transistor, der dem ersten Transistor parallelgeschaltet ist, ist bevorzugt zur Entladung des Kondensators vorgesehen und wird von einem Startimpulssignal der Referenzspannungsquelle gesteuert. Kurz nach dem Einschalten der Versorgungsspannung und noch bevor das von der Schaltung zur Detektion eines Gleichstroms erzeugte Signal das Rücksetzsignal erzeugt, wird dadurch vorteilhafterweise das Rücksetzsignal gesetzt.

Der erste, zweite und dritte Transistor sind bevorzugt n-Kanal-MOSFET-Transistoren.

Besonders bevorzugt ist die Schaltungsanordnung auf einer integrierten Schaltung in CMOS-Technologie aufgebaut.

Weitere Vorteile, Merkmale und Anwendungsmöglichkeiten der Erfindung ergeben sich aus der nachfolgenden Beschreibung eines Ausführungsbeispiels in Verbindung mit der Zeichnung. In der Zeichnung zeigt
- Figur 1: eine erfindungsgemäße Schaltungsanordnung zur Span- nungsüberwachung und Erzeugung eines Rücksetzsi- gnals; und
- Figur 2: eine Ausführungsform einer Schaltung zur Detektion eines Gleichstroms zur Überwachung des Aus- gangsstroms einer Stromquelle einer Referenzspannungsquelle und Er- zeugung eines Signals.

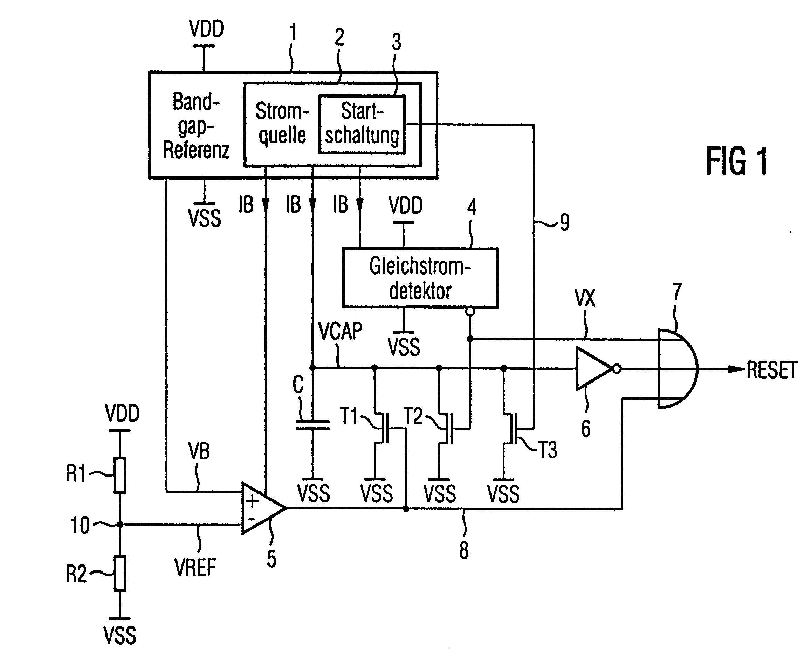

Die in Figur 1 dargestellte erfindungsgemäße Schaltungsanordnung weist eine Referenzspannungsquelle 1 (Band-Gap-Reference) auf, die eine Stromquelle 2 und eine Startschaltung 3 zur Erzeugung eines Startimpulses 9 aufweist.

Die Referenzspannungsquelle 1 ist mit einer Versorgüngsspannung VDD und einem Bezugspotential VSS zur Spannungs- und Stromversorgung verbunden.

Zur Spannungsüberwachung während dem Betrieb ist eine Komparatorschaltüng 5, eine Spannungsteiler R1, R2, ein Kondensator C und ein erster n-Kanal-MOSFET-Transistor T1 vorgesehen.

Eine Ausgangsspannung VB der Referenzspannungsquelle 1 wird einem positiven Eingang der Komparatorschaltung 5 zugeführt. Einem negativen Eingang der Komparatorschaltung 5 wird ein Potential VREF zugeführt, das an einem Abgriff 10 des aus zwei Widerständen R1, R2 bestehenden Spannungsteilers, der zwischen die Versorgungsspannung VDD und das Bezugspotential VSS geschaltet ist, abgegriffen wird.

Die Komparatorschaltung 5 wird von einem Ausgangsstrom IB der Stromquelle 2 in der Referenzspannungsquelle 1 versorgt.

Ein Ausgangssignal 8 der Komparatorschaltung 5 wird einem ODER-Gatter 7 zugeführt, dessen Ausgangssignal ein Rücksetzsignal RESET bildet.

Die Komparatorschaltung 5 und der Spannungsteiler R1, R2 überwachen die Versorgungsspannung VDD und erzeugen bei einem Absinken der Versorgungsspannung VDD unterhalb einer durch die Ausgangsspannung VB der Referenzspannungsquelle 1 vorgegebenen Schwellspannung das Rücksetzsignal RESET. Allerdings funktioniert die Spannungsüberwachung erst ab einer Mindestversorgungsspannung. Erst bei einem Überschreiten dieser Mindestversorgungsspannung durch die Versorgungsspannung VDD, arbeitet die Referenzspannungsquelle 1 und versorgt die Komparatorschaltung 5 mit einem Strom.

Zur Verzögerung des Abschaltens des Rücksetzsignals RESET ist der Kondensator C und der erste n-Kanal-MOSFET-Transistor T1 vorgesehen.

Der Kondensator C wird von dem Ausgangsstrom IB der Stromquelle 2 in der Referenzspannungsquelle 1 auf eine Kondensatorspannung VCAP aufgeladen. Ferner ist der Kondensator mit dem Eingang einer Inverterschaltung 6, deren Ausgang mit einem Eingang des ODER-Gatters 7 verbunden ist, verbunden.

Über den ersten n-Kanal-MOSFET-Transistor T1, dessen Laststrecke parallel zu dem Kondensator C geschaltet ist, kann der Kondensator C entladen werden. Der Steueranschluß des ersten n-Kanal-MOSFET-Transistors T1 ist dazu mit dem Ausgang der Komparatorschaltung 5 verbunden.

Im Normalbetrieb, d.h. bei normaler Versorgungsspannung VDD, ist das Ausgangssignal 8 der Komparatorschaltung 5 logisch Null und der erste n-Kanal-MOSFET-Transistor T1 sperrt. Der Kondensator C wird durch den Ausgangsstrom IB der Stromquelle 2 aufgeladen. Sinkt die Versorgungsspannung VDD und damit das Potential VREF an dem Abgriff 10 des Spannungsteilers R1, R2 unter die Ausgangsspannung VB der Referenzspannungsquelle 1, wird das Ausgangssignal 8 der Komparatorschaltung 5 logisch Eins und das Rücksetzsignal RESET gesetzt. Der erste n-Kanal-MOSFET-Transistor T1 beginnt zu leiten und entlädt den Kondensator C. Die Kondensatorspannung VCAP und damit die Eingangsspannung an der Inverterschaltung 6 sinken ab. Unterschreitet die Kondensatorspannung VCAP die Schaltschwelle der Inverterschaltung 6, kippt diese um und das Ausgangssignal der Inverterschaltung 6 wird logisch Eins.

Bei einem Ansteigen der Versorgungsspannung und einem Überschreiten des Potentials VREF an dem Abgriff 10 des Spannungsteilers R1, R2 über die Ausgangsspannung VB der Referenzspannungsquelle 1 schaltet das Ausgangssignal 8 der Komparatorschaltung 5 auf logisch Null. Der erste n-Kanal-MOSFET-Transistor T1 sperrt. Dadurch lädt der Ausgangsstrom IB der Stromquelle 2 den Kondensator C langsam wieder auf. Überschreitet die Kondensatorspannung VCAP die Schaltschwelle der Inverterschaltung 6, kippt diese um und das Ausgangssignal der Inverterschaltung 6 wird logisch Null. Damit wird auch das Rücksetzsignal RESET zurückgenommen.

Der Kondensator C bewirkt durch seine Ladezeitkonstante ein verzögertes Abschalten des Rücksetzsignals RESET.

Zur Erzeugung des Rücksetzsignals RESET beim Einschalten der Versorgungsspannung VDD ist die im folgenden beschriebene Schaltung vorgesehen.

Beim Einschalten der Versorgungsspannung erzeugt die Startschaltung 3 der Referenzspannungsquelle 1 ein Startimpulssignal 9, das an den Steueranschluß eines dritten n-Kanal-MOSFET-Transistors T3 geführt wird. Die Laststrecke des dritten n-Kanal-MOSFET-Transistors T3 ist zwischen den Eingang der Inverterschaltung 6, deren Ausgangssignal dem ODER-Gatter 7 zugeführt wird, und das Bezugspotential VSS geschaltet.

Ist das Startimpulssignal 9 logisch Eins, wird der dritte n-Kanal-MOSFET-Transistors T3 leitend. Der Kondensator C entlädt sich über den leitenden dritten n-Kanal-MOSFET-Transistors T3. Am Eingang der Inverterschaltung 6 liegt eine logische Null an und das Rücksetzsignals RESET wird gesetzt. Dadurch wird beim Einschalten der Versorgungsspannung VDD verhindert, daß sich der Kondensator C durch Leckströme aus der Stromquelle 2 auflädt und das Rücksetzsignals RESET während dem Ansteigen der Versorgungsspannung VDD zurückgenommen wird. Dies ist insbesondere bei einer tiefen Temperatur wirkungsvoll, da in einem solchen Fall die Stromquelle 2 erst sehr spät einen Ausgangsstrom IB liefert.

Sobald der Startimpuls auf logisch Null zurückgenommen wird, sperrt der dritte n-Kanal-MOSFET-Transistors T3 und der Kondensator C wird von Leckströmen und dem Ausgangsstrom IB der Stromquelle 2 aufgeladen.

Um zu verhindern, daß das Rücksetzsignal RESET zurückgesetzt wird bevor die Versorgungsspannung VDD den erforderlichen Wert zum Betrieb einer elektronischen Schaltung erreicht hat, wird der Ausgangsstrom IB der Stromquelle ferner durch eine Schaltung zur Detektion eines Gleichstroms 4 überwacht. Die Schaltung zur Detektion eines Gleichstroms 4 erzeugt abhängig vom Ausgangsstrom IB ein Signal VX, das mit dem Ausgangssignal 8 der Komparatorschaltung 5 und der invertierten Kondensatorspannung VCAP zur Erzeugung des Rücksetzsignals RESET mit dem ODER-Gatter logisch verknüpft 7 wird.

Ferner steuert das Signal VX einen zweiten n-Kanal-MOSFET-Transistor T2, der dem ersten n-Kanal-MOSFET-Transistor T1 parallelgeschaltet ist. Der zweite n-Kanal-MOSFET-Transistor T2 entlädt den Kondensator C, wenn das Signal VX logisch Eins ist und das Rücksetzsignal RESET gesetzt ist. Dadurch wird ein verzögertes Abschalten des Rücksetzsignals RESET bewirkt, wenn das Signal VX auf logisch Null zurückschaltet.

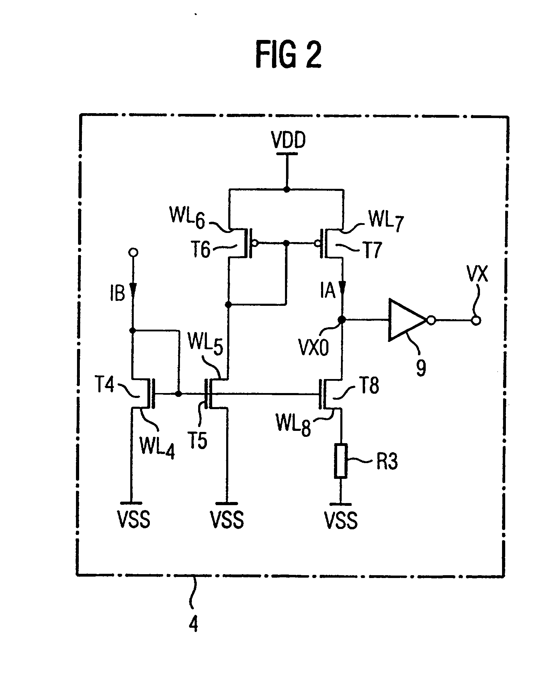

In Figur 2 ist ein Ausführungsbeispiel der Schaltung zur Detektion eines Gleichstroms 4 dargestellt.

Der Ausgangsstrom IB der Stromquelle 2 der Referenzspannungsquelle 1 wird einem ersten Stromspiegel, der zwei n-Kanal-MOSFET-Transistoren T4 und T5 aufweist und mit dem Bezugspotential VSS verbunden ist, zugeführt. Dem ersten Stromspiegel ist ein zweiter Stromspiegel, der zwei p-Kanal-MOSFET-Transistoren T6 und T7 aufweist und mit der Versorgungsspannung VDD verbunden ist, nachgeschaltet. Die Laststrecke eines vierten n-Kanal-MOSFET-Transistors T8 ist in Reihe mit einem Widerstand R3 zwischen den Ausgang des zweiten Stromspiegels und das Bezugspotential VSS geschaltet. Der Steueranschluß des vierten n-Kanal-MOSFET-Transistors T8 ist mit den Steueranschlüssen der Transistoren T4 und T5 des ersten Stromspiegels verbunden. Zwischen den Ausgang der Schaltung zur Detektion eines Gleichstroms 4 und dem Ausgang des zweiten Stromspiegels ist eine weitere Inverterschaltung 9 geschaltet, die eine Spannung VX0 am Eingang invertiert.

Die Schaltung zur Detektion eines Gleichstroms 4 erzeugt das Signal VX, wenn der Ausgangsstrom IB der Stromquelle 2 kleiner ist als eine Schwelle, die insbesondere durch das Kanal-Weiten/Längenverhältnis WL₈ des vierten n-Kanal-MOSFET-Transistors T8 und dem Widerstand R3 bestimmt wird.

Die Kanal-Weiten/Längenverhältnisse WL₄, WL₅, WL₆ und WL₇ der MOSFET-Transistoren T4 bzw. T5 bzw. T6 bzw. T7 des ersten und zweiten Stromspiegels sind gleich, so daß der Ausgangsstrom IB der Stromquelle 2 in einen entsprechenden Ausgangsstrom IA des zweiten Stromspiegels gespiegelt wird.

Ein Teil des Ausgangsstroms IA des zweiten Stromspiegels fließt über die Laststrecke des vierten n-Kanal-MOSFET-Transistors T8 und durch den Widerstand R3. Am Widerstand R3 fällt eine Spannung proportional dem Ausgangsstrom IA des zweiten Stromspiegels ab. Abhängig von dieser Spannung wird der vierte n-Kanal-MOSFET-Transistors T8 und die über die Laststrecke dieses Transistors abfallende Spannung gesteuert.

Bei kleinen Strömen durch den Widerstand R3 ist auch der Spannungsabfall über diesen Widerstand klein und der vierte n-Kanal-MOSFET-Transistors T8 führt einen größeren Strom als die Transistoren des ersten und zweiten Stromspiegels. Die Spannung VX0 am Eingang der Inverterschaltung 9 liegt dann unterhalb der Schaltschwelle der Inverterschaltung 9, so daß das Ausgangssignal VX auf eine logische Eins kippt und das Rücksetzsignal RESET gesetzt wird.

Steigt der Ausgangsstrom IB der Stromquelle 2 an, steigt auch der Strom durch den Widerstand R3 an, der wiederum einen größeren Spannungsabfall über diesen Widerstand bewirkt und den Strom durch den vierten n-Kanal-MOSFET-Transistors T8 begrenzt. Damit steigt die Spannung VX0 am Eingang der Inverterschaltung 9. Bei Überschreiten der Schaltschwelle der Inverterschaltung 9 durch die Spannung VX0 kippt die Inverterschaltung 9 auf eine logische Null und das Rücksetzsignal RESET wird zurückgenommen. Der Ausgangsstrom IB der Stromquelle ist ausreichend für die Versorgung der Komparatorschaltung 5, die die Versorgungsspannung VDD überwacht.

Durch die Detektion des Ausgangsstroms IB der Stromquelle 2 der Referenzspannungsquelle 1 wird der Spannungsbereich während dem "Hochfahren" der Versorgungsspannung VDD überbrückt, in dem die Komparatorschaltung aufgrund eines zu geringen Ausgangsstrom IB der Stromquelle noch nicht richtig arbeitet.

Der Ausgangsstrom IB der Stromquelle 2 wird durch einen strombestimmenden Widerstand eingestellt. Für einen guten Temperaturgang der Schaltungsanordnung zur Spannungsüberwachung und Erzeugung eines Rücksetzsignals sollte der Widerstand R3 in der Schaltung zur Detektion eines Gleichstroms 4 einen Temperaturgang aufweisen, der je nach verwendeter Technologie auf den Temperaturgang des strombestimmenden Widerstands in der Stromquelle 2 abgestimmt ist.

Die Schaltung zur Detektion eines Gleichstroms 4 überwacht den Ausgangsstrom IB der Stromquelle 2 direkt und ist deshalb sehr viel temperaturunempfindlicher und technologieunabhängiger als eine Power-On-Reset-Schaltung, deren Schwellspannung einen großen Temperaturbereich und Prozeßschwankungsbereich überdecken muß.

## Patentansprüche

1. Schaltungsanordnung zur Spannungsüberwachung und Erzeugung eines Rücksetzsignals (RESET) mit:
(a) einer Referenzspannungsquelle (1);
(b) einer Komparatorschaltung (5), die derart geschaltet ist, dass sie eine Ausgangsspannung (VB) der Referenzspannungsquelle (1) mit einem Potential (VREF) an einem Abgriff (10) eines Spannungsteilers (R1, R2), der zwischen eine Versorgungsspannung (VDD) und ein Bezugspotential (VSS) geschaltet ist, vergleicht;
(c) einem Kondensator (C);
(d) einem ersten Transistor (T1) zur Entladung des Kondensators (C), der von einem Ausgangssignal (8) einer Komparatorschaltung (5) steuerbar ist;
(e) wobei aus dem Ausgangssignal (8) der Komparatorschaltung (5) und aus einer Spannung (VCAP) des Kondensators durch eine logische ODER-Verknüpfung (7) das Rücksetzsignal (RESET) erzeugbar ist;
**dadurch gekennzeichnet, dass**
(f) die Referenzspannungsquelle (1) eine Stromquelle (2) aufweist, wobei der Kondensator (C) von einem Ausgangsstrom (IB) der Stromquelle aufladbar ist und die Komparatorschaltung (5) derart geschaltet ist, dass sie von dem Ausgangsstrom (IB) der Stromquelle (2) versorgt wird;
(g) eine Schaltung zur Detektion eines Gleichstroms (4) vorgesehen ist, die derart gestaltet ist, dass
(g1) sie den Ausgangsstrom (IB) der Stromquelle (2) empfängt und davon abhängig ein Signal (VX) erzeugt, das mit dem Ausgangssignal (8) der Komparatorschaltung (5) und der Kondensatorspannung (VCAP) zur Erzeugung des Rücksetzsignals (RESET) der logischen ODER-Verknüpfung (7) zugeführt ist, und
(g2) das von der Schaltung (4) zur Detektion eines Gleichstroms erzeugte Signal (VX) gesetzt ist, wenn der Ausgangsstrom (IB) der Stromquelle (2) eine vorgebbare Stromschwelle unterschreitet, und zurückgenommen ist, wenn der Ausgangsstrom (IB) der Stromquelle (2) die vorgebbare Stromschwelle überschreitet
wobei die Schaltung zur Detektion eines Gleichstroms (4) ausgebildet ist, um während eines Hochfahrens der Versorgungsspannung (V_{DD}) einen Spannungsbereich zu überbrücken, bei dem die Komparatorschaltung (5) aufgrund eines zu geringen Ausgangsstroms der Stromquelle (2) nicht richtig arbeitet;
(h) ein zweiter, dem ersten Transistor (T1) parallelgeschalteter Transistor (T2) zur Entladung des Kondensators (C) vorgesehen ist, der durch das von der Schaltung (4) zur Detektion eines Gleichstroms erzeugte Signal (VX) steuerbar ist.

2. Schaltungsanordnung nach Anspruch 1,
**dadurch gekennzeichnet, dass**
die Schaltung zur Detektion eines Gleichstroms (4) einen ersten, den Ausgangsstrom (IB) der Stromquelle (2) aufnehmenden, Stromspiegel (T4, T5) und einen zweiten, dem ersten Stromspiegel nachgeschalteten, Stromspiegel (T6, T7) und einen vierten Transistor (T8) und einen der Laststrecke des vierten Transistors (T8) nachgeschalteten Widerstand (R3) aufweist, wobei der Steueranschluß des vierten Transistors (T8) mit den Steueranschlüssen der Transistoren (T4, T5) des ersten Stromspiegels verbunden ist und die Laststrecke des vierten Transistors (T8) einen Strom, der proportional zum Ausgangsstrom (IA) des zweiten Stromspiegels (T6, T7) ist, führt und das Signal (VX) durch den Spannungsabfall über dem Widerstand (R3) bestimmt ist.

3. Schaltungsanordnung nach Anspruch 2,
**dadurch gekennzeichnet, dass**
die Transistoren (T4, T5) des ersten Stromspiegels und der vierte Transistor (T8) als n-Kanal-MOSFET-Transistoren und die Transistoren (T6, T7) des zweiten Stromspiegels als p-Kanal-MOSFET-Transistoren in CMOS-Technologie ausgeführt sind.

4. Schaltungsanordnung nach Anspruch 3,
**dadurch gekennzeichnet, dass**
die Transistoren (T4 - T7) des ersten und zweiten Stromspiegels gleiche Kanal-Weiten/Längenverhältnisse (WL₄ - WL₇) aufweisen und das Kanal-Weiten/Längenverhältnis (WL₈) des vierten Transistors (T8) größer ist als die Kanal-Weiten/Längenverhältnisse (WL₄ - WL₇) der Transistoren (T4 - T7) des ersten und zweiten Stromspiegels.

5. Schaltungsanordnung nach einem der Ansprüche 2, 3 oder 4,
**dadurch gekennzeichnet, dass**
der dem vierten Transistor (T8) nachgeschaltete Widerstand (R3) einen dem Temperaturkoeffizienten eines den Ausgangsstrom (IB) der Stromquelle (2) bestimmenden Widerstands angepaßten Temperaturkoeffizienten aufweist.

6. Schaltungsanordnung nach einem der vorhergehenden Ansprüche,
**dadurch gekennzeichnet, dass**
ein dritter dem ersten Transistor (T1) parallelgeschalteter Transistor (T3) zur Entladung des Kondensators (C) vorgesehen ist, der von einem Startimpulssignal (9) der Referenzspannungsquelle (1) steuerbar ist.

7. Schaltungsanordnung nach Anspruch 6,
**dadurch gekennzeichnet, dass**
der erste, zweite und dritte Transistor (T1 - T3) n-Kanal-MOSFET-Transistoren sind.

8. Schaltungsanordnung nach Anspruch 7,
**dadurch gekennzeichnet, dass**
die Schaltungsanordnung auf einer integrierten Schaltung in CMOS-Technologie aufgebaut ist.

## Claims

1. Circuit arrangement for voltage monitoring and for generating a reset signal (RESET) comprising:
(a) a reference voltage source (1);
(b) a comparator circuit (5) connected in such a way that it compares an output voltage (VB) of the reference voltage source (1) with a potential (VREF) at a tap (10) of a voltage divider (R1, R2) connected between a supply voltage (VDD) and a reference-earth potential (VSS);
(c) a capacitor (C);
(d) a first transistor (T1) for discharging the capacitor (C), which can be controlled by an output signal (8) of a comparator circuit (5);
(e) wherein the reset signal (RESET) can be generated from the output signal (8) of the comparator circuit (5) and from a voltage (VCAP) of the capacitor by means of a logic OR combination (7);
**characterized in that**
(f) the reference voltage source (1) has a current source (2), wherein the capacitor (C) can be charged by an output current (IB) of the current source and the comparator circuit (5) is connected in such a way that it is supplied by the output current (IB) of the current source (2);
(g) a circuit for detecting a DC current (4) is provided, said circuit being configured in such a way that
(g1) it receives the output current (IB) of the current source (2) and, in a manner dependent thereon, generates a signal (VX) that is fed to the logic OR combination (7) with the output signal (8) of the comparator circuit (5) and the capacitor voltage (VCAP) in order to generate the reset signal (RESET), and
(g2) the signal (VX) generated by the circuit (4) for detecting a DC current is set if the output current (IB) of the current source (2) falls below a predeterminable current threshold, and is reset if the output current (IB) of the current source (2) exceeds the predeterminable current threshold, wherein the circuit for detecting a DC current (4) is designed to bridge, during a run-up of the supply voltage (VDD), a voltage range in which the comparator circuit (5) does not operate correctly on account of an excessively low output current of the current source (2);
(h) a second transistor (T2) for discharging the capacitor (C) is provided, which second transistor is connected in parallel with the first transistor (T1) and can be controlled by the signal (VX) generated by the circuit (4) for detecting a DC current.

2. Circuit arrangement according to Claim 1,
**characterized in that**
the circuit for detecting a DC current (4) has a first current mirror (T4, T5), which takes up the output current (IB) of the current source (2), and a second current mirror (T6, T7), which is connected downstream of the first current mirror, and a fourth transistor (T8) and a resistor (R3) connected downstream of the load path of the fourth transistor (T8), wherein the control terminal of the fourth transistor (T8) is connected to the control terminals of the transistors (T4, T5) of the first current mirror and the load path of the fourth transistor (T8) carries a current proportional to the output current (IA) of the second current mirror (T6, T7), and the signal (VX) is determined by the voltage drop across the resistor (R3).

3. Circuit arrangement according to Claim 2,
**characterized in that**
the transistors (T4, T5) of the first current mirror and the fourth transistor (T8) are embodied as n-channel MOSFET transistors and the transistors (T6, T7) of the second current mirror are embodied as p-channel MOSFET transistors using CMOS technology.

4. Circuit arrangement according to Claim 3,
**characterized in that**
the transistors (T4 - T7) of the first and second current mirrors have identical channel width/length ratios (WL₄ - WL₇) and the channel width/length ratio (WL₈) of the fourth transistor (T8) is greater than the channel width/length ratios (WL₄ - WL₇) of the transistors (T4 - T7) of the first and second current mirrors.

5. Circuit arrangement according to any of Claims 2, 3 or 4,
**characterized in that**
the resistor (R3) connected downstream of the fourth transistor (T8) has a temperature coefficient adapted to the temperature coefficient of a resistor that determines the output current (IB) of the current source (2).

6. Circuit arrangement according to any of the preceding claims,
**characterized in that**
a third transistor (T3) for discharging the capacitor (C) is provided, which third transistor is connected in parallel with the first transistor (T1) and can be controlled by a start pulse signal (9) of the reference voltage source (1).

7. Circuit arrangement according to Claim 6,
**characterized in that**
the first, second and third transistors (T1 - T3) are n-channel MOSFET transistors.

8. Circuit arrangement according to Claim 7,
**characterized in that**
the circuit arrangement is constructed on an integrated circuit using CMOS technology.

## Revendications

1. Montage de contrôle et de production d'un signal (RESET) de remise à l'état initial, comprenant :
(a) une source (1) de tension de référence ;
(b) un circuit (5) formant comparateur, qui est monté de manière à comparer une tension (VB) de sortie de la source (1) de tension de référence à un potentiel (VREF) sur une prise (10) d'un diviseur (R1, R2) de tension qui est monté entre une tension (VDD) d'alimentation et un potentiel (VSS) de référence ;
(c) un condensateur (C) ;
(d) un premier transistor (T1) qui est destiné à décharger le condensateur (C) et qui peut être commandé par un signal (8) de sortie d'un circuit (5) formant comparateur ;
(e) dans lequel le signal (RESET) de remise à l'état initial peut être produit à partir du signal (8) de sortie du circuit (5) formant comparateur et d'une tension (V4) du condensateur par une combinaison (7) logique OU ;
**caractérisé en ce que**
(f) la source (1) de tension de référence comporte une source (2) de courant, le condensateur (C) pouvant être chargé par un courant (IB) de sortie de la source de courant et le circuit (5) formant comparateur est monté de manière à être alimenté par le courant (IB) de sortie de la source (2) de courant ;
(g) il est prévu un circuit de détection d'un courant (4) continu, qui est tel que
(g1) il reçoit le courant (IB) de sortie de la source (2) de courant et produit en fonction de celui-ci un signal (VX) qui est envoyé, avec le signal (8) de sortie du circuit (5) formant comparateur et la tension (V4) du condensateur, à la combinaison (7) logique OU, pour produire le signal (RESET) de remise à l'état initial, et
(g2) le signal (VX) produit par le circuit (4) de détection d'un courant continu est appliqué, lorsque le courant (IB) de sortie de la source (2) de courant devient inférieur à un seuil de courant pouvant être prescrit, et est repris, lorsque le courant (IB) de sortie de la source (2) de courant dépasse le seuil de courant pouvant être prescrit, le circuit de détection d'un courant (4) continu étant formé pour, pendant une montée en puissance de la tension (VDD) de l'alimentation, découpler un intervalle de tension, dans lequel le circuit (5) formant comparateur ne travaille pas correctement en raison d'un courant de sortie trop petit de la source (2) de courant.
(h) il est prévu un deuxième transistor (T2) qui est monté en parallèle avec le premier transistor (T1), qui est destiné à décharger le condensateur (C) et qui peut être commandé par le signal (VX) produit par le circuit (4) de détection d'un courant continu.

2. Montage suivant la revendication 1,
**caractérisé en ce que**
le circuit de détection d'un courant (4) continu comporte un premier miroir (T4, T5) de courant absorbant le courant (IB) de sortie de la source (2) de courant et un deuxième miroir (T6, T7) de courant monté en aval du premier miroir de courant et un quatrième transistor (T8) et une résistance (R3) montée en aval de la section de charge du quatrième transistor (T8), la borne de commande du quatrième transistor (T8) étant relié aux bornes de commande des transistors (C4, C5) du premier miroir de courant et la section de charge du quatrième transistor (T8) conduisant un courant qui est proportionnel au courant (IA) de sortie du deuxième miroir (T6, T7) de courant et le signal (VX) est déterminé par la chute de tension aux bornes de la résistance (R3).

3. Montage suivant la revendication 2,
**caractérisé en ce que**
les transistors (T4, T5) du premier miroir de courant et le quatrième transistors (T8) sont réalisés sous la forme de transistors MOSFET à canal n et les transistors (T6, T7) du deuxième miroir de courant sont réalisés en technologie CMOS sous la forme de transistors MOSFET à canal p.

4. Montage suivant la revendication 3,
**caractérisé en ce que**
les transistors (T4 à T7) du premier et du deuxième miroirs de courant ont les mêmes rapports (WL₄ à WL₇) largeur/longueur du canal et le rapport (WL₈) largeur/longueur du canal du quatrième transistor (T8) est plus grand que le rapport (WL₄ à WL₇) largeur/longueur de canal des transistors (T4 à T7) du premier et deuxième miroirs de courant.

5. Montage suivant l'une des revendications 2, 3 ou 4,
**caractérisé en ce que**
la résistance (R3) montée en aval du quatrième transistor (T8) a un coefficient de température adapté au coefficient de température d'une résistance déterminant le courant (IB) de sortie de la source (2) de courant.

6. Montage suivant l'une des revendications précédentes,
**caractérisé en ce que**
il est prévu un troisième transistor (T3) qui est monté en parallèle avec le premier transistor (T1), qui est destiné à décharger le condensateur (C) et qui peut être commandé par un signal (9) d'impulsion de démarrage de la source (1) de tension de référence.

7. Montage suivant la revendication 6,
**caractérisé en ce que**
le premier, le deuxième et le troisième transistors (T1 à T3) sont des transistors MOFSET à canal n.

8. Montage suivant la revendication 7,
**caractérisé en ce que**
le montage est formé sur un circuit intégré en technologie CMOS.
